# EUROPÄISCHE PATENTANMELDUNG

(11) **EP 1 588 823 A1**
(43) Veröffentlichungstag der Anmeldung: **26.10.2005**
(21) Anmeldenummer: 04015774.5
(22) Anmeldetag: 05.07.2004
(51) Int. Cl.: B29C 45/26, B29C 33/30

(54) **Vorrichtung zum Herstellen von Spritzguss-Formteilen**

(30) Priorität: 22.04.2004 DE 102004019633
(71) Anmelder: August Läpple GmbH & Co. KG, 74076 Heilbronn (DE)
(72) Erfinder:
(74) Vertreter: Naumann, Ulrich

(57) **Zusammenfassung**

Die Erfindung betrifft eine Vorrichtung zum Herstellen von Spritzguss-Formteilen, Druckguss-Formteilen oder Press-Formteilen, mit einem Kernteil (31) und einem zugeordneten Mantelteil (51). Das Kernteil (31) ist mit einer Auswerferplatte (41) verbunden, die zwischen einer Betriebsstellung und einer Auswurfstellung verfahrbar ist. Das Kernteil (31) ist an einem Kernträger montierbar. Dieser ist als ein Kernträgerrahmen (11) mit einer zentralen Durchlassöffnung (13) ausgebildet. Das Kernteil (31) und die Auswerferplatte (41) bilden eine gemeinsame Baueinheit, die von einer Seite aus an dem Kernträgerrahmen (11) montierbar ist, wobei die Auswerferplatte (41) in die zentrale Durchlassöffnung (13) einführbar ist und diese zu durchdringen vermag.

## Beschreibung

Die Erfindung betrifft eine Vorrichtung zum Herstellen von Spritzguss-Formteilen, Druckguss-Formteilen oder Press-Formteilen, insbesondere von großflächigen Kunststoff-Formteilen, gemäß dem Oberbegriff des Anspruchs 1. Derartige Vorrichtungen dienen insbesondere zur Herstellung von Komponenten für Kraftfahrzeuge, beispielsweise von Stoßfängern, flächigen Verkleidungselementen, Armaturenbretteinheiten, Spoilern und dergleichen.

Zu diesem Zweck besitzt die Vorrichtung ein Kernteil mit einer Form gebenden Kernseite und ein Mantelteil mit einer Form gebenden Mantelseite, die zwischen einer maschinenseitiger Aufspannfläche und einer Druck ausübenden Anordnung gegeneinander verspannbar sind und dabei zwischen sich einen Hohlraum begrenzen, der dem zu erzeugenden Formteil entspricht und in den - im Falle der Ausbildung als Spritzgießwerkzeug - wenigstens eine Hochdruckzuführung für das Spritzgussmaterial mündet. Das Kernteil und das Mantelteil werden auch als Patrize bzw. Matrize bezeichnet. Das Kernteil ist an seiner Unterseite über Betätigungsstangen und/oder über Führungsorgane mit einer dem speziellen Formteil und somit dem speziellen Kernteil zugeordneten Auswerferplatte verbunden, die zwischen einer Betriebsstellung und einer Auswurfstellung relativ zu dem Kernteil verfahrbar ist. Durch das Verfahren der Auswerferplatte in die Auswurfstellung werden gleitverschieblich gelagerte Auswerfereinsätze, die in der Betriebsstellung noch formschlüssig in die Form gebende Kernseite des Kernteils eingesetzt sind, ausgefahren und führen dadurch eine Auswurfbewegung zum Entformen eines soeben hergestellten Formteils aus.

Das Kernteil ist an einem Kernträger montierbar, der üblicherweise plattenförmig ausgebildet ist und mehrere Bohrungen aufweist, die von den genannten Betätigungsstangen und/oder Führungsorganen durchdrungen werden, um die Auswurfbewegung der Auswerferplatte relativ zu dem Kernteil zu ermöglichen. Der modulare Aufbau aus Kernteil und hiervon separatem Kernträger hat den Vorteil, dass an demselben Kernträger wahlweise verschiedene Kernteile mit unterschiedlicher Form gebender Kernseite montiert werden können, um unterschiedliche Formteile herzustellen, wobei selbstverständlich auch das zugeordnete Mantelteil ausgetauscht werden muss. Allerdings verursacht der Einsatz unterschiedlicher Kernteile einen unerwünscht hohen Montageaufwand, da nicht nur das an der Oberseite des Kernträgers montierte Kernteil, sondern auch die unterseitig angeordnete, mit dem jeweiligen Kernteil verbundene Auswerferplatte ausgetauscht werden muss. Dies ist insbesondere hinsichtlich der Bewegungsmechanik von seitlich beweglichen Auswerferabschnitten des Kernteils, wie beispielsweise der Bewegungsmechanik von Eckschiebern, aufwendig.

Es ist daher eine Aufgabe der Erfindung, bei einer Vorrichtung der erläuterten Art die Umkonfigurierung für unterschiedliche zu erzeugende Formteile zu vereinfachen und die Vorrichtung hierdurch noch flexibler hinsichtlich der Herstellung von unterschiedlichen Formteilen zu gestalten.

Diese Aufgabe wird durch eine Vorrichtung mit den Merkmalen des Anspruchs 1 gelöst, und insbesondere dadurch, dass der Kernträger als ein Kernträgerrahmen mit einer zentralen Durchlassöffnung ausgebildet ist, und dass das Kernteil und die Auswerferplatte eine gemeinsame Baueinheit bilden, die von einer Seite aus an dem Kernträgerrahmen montierbar ist, wobei die Auswerferplatte in die zentrale Durchlassöffnung des Kernträgerrahmens einführbar ist und diese zu durchdringen vermag.

Bei der erfindungsgemäßen Vorrichtung ist der Kernträger also rahmenförmig mit einer zentralen Durchlassöffnung ausgebildet, die ein Passieren der Auswerferplatte gestattet. Dadurch können das Kernteil und die Auswerferplatte als eine vormontierte Baueinheit von einer Seite aus - insbesondere von oben - entlang einer einzigen Montagerichtung an dem Kernträgerrahmen montiert werden. Das Kernteil wird also mit der Auswerferplatte voraus an dem Kernträgerrahmen angesetzt oder eingesetzt. Die Durchlassöffnung des Kernträgerrahmens ist dabei so dimensioniert, dass die Auswerferplatte durch die Durchlassöffnung hindurch geführt werden kann. Auch für die Demontage können das Kernteil und die Auswerferplatte als eine gemeinsame Baueinheit entgegen der genannten Montagerichtung von dem Kernträgerrahmen entnommen werden.

Das für ein spezielles Formteil vorgesehene Kernteil und die diesem Kernteil zugeordnete Auswerferplatte können also miteinander verbunden bleiben, während sie an dem Kernträger montiert oder von dem Kernträger demontiert werden. Insbesondere ist es nicht - wie bei bekannten Kernträgern mit durchgehendem Boden - erforderlich, die Verbindung zwischen Kernteil und zugeordneter Auswerferplatte zu lösen, um das Kernteil von der einen Seite - insbesondere von oben - an dem Kernträger zu montieren und die Auswerferplatte von der gegenüberliegenden Seite - insbesondere von unten - an dem Kernträger zu befestigen.

Dadurch, dass das Kernteil und die Auswerferplatte als gemeinsame Baueinheit an dem Kernträgerrahmen montiert oder von diesem demontiert werden können, ist ein einfaches und schnelles Umkonfigurieren des Werkzeugs für unterschiedliche zu erzeugende Formteile möglich. Versuche haben gezeigt, dass die Baueinheit aus Kernteil und Auswerferplatte im Zusammenbau innerhalb von ca. einer Stunde ausgebaut werden kann, ohne hierfür weiter zerlegt werden zu müssen, während für diesen Vorgang bei bekanntem Aufbau bis zu 20 Stunden und mehr erforderlich sind. Der Kernträgerrahmen kann also mit geringem Aufwand mit völlig unterschiedlichen Kernteilen bestückt werden, so dass - wenn auch das zugeordnete Mantelteil entsprechend ausgetauscht wird - mit demselben Kernträgerrahmen nahezu beliebig viele verschiedene Typen von Formteilen - beispielsweise Stoßfänger - gefertigt werden können. Der Kernträgerrahmen eignet sich somit gleichermaßen zur Aufnahme von Prototyp-Einsätzen und Serien-Kernteilen, jeweils in Verbindung mit dem zugeordneten Mantelteil.

Je nach dem, auf welcher Höhe des Kernträgerrahmens das Kernteil montiert wird, ragt die mit dem Kernteil verbundene Auswerferplatte während der Montage in die zentrale Durchlassöffnung des Kernträgerrahmens hinein oder durchdringt diese. Jedenfalls umgibt die Durchlassöffnung die Betätigungsstangen und eventuelle Führungsorgane, die die Auswerferplatte in der Betriebsstellung mit dem Kernteil verbinden. Wichtig ist also, dass der Kernträgerrahmen eine einzige zentrale Durchlassöffnung für im Wesentlichen sämtliche Befestigungsstangen und Führungsorgane zwischen dem Kernteil und der Auswerferplatte aufweist, so dass keine oder allenfalls wenige Verbindungen zwischen dem Kernteil und der Auswerferplatte gelöst werden müssen, um das Kernteil mit der Auswerferplatte an dem Kernträgerrahmen zu montieren oder von dem Kernträgerrahmen zu demontieren. Zusätzlich zu der zentralen Durchlassöffnung kann der Kernträgerrahmen - wie an sich üblich - weitere Bohrungen (mit oder ohne Gewinde) oder Kanäle zu Montage-, Führungs-, Kühl- oder Versorgungszwecken aufweisen, ohne dass dies die mit dem erfindungsgemäßen Kernträgerrahmen erzielten Vorteile beeinträchtigt.

Es ist bevorzugt, wenn das Kernteil im montierten Zustand der Vorrichtung zumindest teilweise formschlüssig in die zentrale Durchlassöffnung des Kernträgerrahmens hineinragt. Dadurch ist ein seitlich stabiler Sitz des Kernteils am Kernträgerrahmen gewährleistet.

Vorzugsweise besitzt das Kernteil außerdem seitliche Stützabschnitte, die im montierten Zustand der Vorrichtung auf der Oberseite des Kernträgerrahmens aufliegen, so dass das Kernteil stabil an dem Kernträgerrahmen angeordnet ist.

Ferner ist es bevorzugt, wenn der Kernträgerrahmen die Grundform eines rechteckigen Rings mit rechteckigem Querschnitt besitzt. Hierdurch kann der Kernträgerrahmen in besonders flexibler Weise mit unterschiedlichen Kernteilen bestückt werden.

Weiterhin ist es bevorzugt, wenn der Kernträgerrahmen an einer Grundplatte montiert ist, die eine Befestigung der Vorrichtung an einer maschinenseitigen Aufspannfläche ermöglicht. Ein modularer Aufbau mit einem Kernträgerrahmen und einer hiervon separaten Grundplatte vereinfacht die Fertigung dieser Bauteile. Für eine Umkonfigurierung des Werkzeugs für unterschiedliche Formteile ist - wie erläutert - lediglich ein Austauschen des Kernteils mit Auswerferplatte und des Mantelteils erforderlich. Der flexibel bestückbare Kernträgerrahmen dagegen kann an der Grundplatte dauerhaft befestigt bleiben. Alternativ zu dem erläuterten modularen Aufbau können der Kernträgerrahmen und die Grundplatte jedoch auch einstückig ausgebildet sein.

Schließlich ist es bevorzugt, wenn an der genannten Grundplatte (separat oder integral mit dem Kernträgerrahmen ausgebildet) eine hubbetätigbare Adapterplatte gelagert ist, die mit der Auswerferplatte fest verbunden werden kann, um die Auswerferplatte zu den Auswurfbewegungen anzutreiben. Diese Adapterplatte trägt somit ebenfalls dazu bei, das Werkzeug in flexibler Weise zur Herstellung unterschiedlicher Formteile anpassen zu können. Bei der Montage eines einem bestimmten Formteil entsprechenden Kernteils ist es also lediglich erforderlich, die mit dem Kernteil als Baueinheit verbundene Auswerferplatte durch die Durchlassöffnung des Kernträgerrahmens zu führen und sodann mit der genannten Adapterplatte dauerhaft zu verbinden.

Weitere Ausführungsformen der Erfindung sind in den Unteransprüchen genannt und in den Figuren gezeigt.

Die Erfindung wird nachfolgend lediglich beispielhaft unter Bezugnahme auf die Zeichnungen erläutert.
- Fig. 1: zeigt eine Perspektivansicht eines Kernträgerrahmens.
- Fig. 2: zeigt eine Perspektivansicht einer Grundplatte.
- Fig. 3: zeigt eine Perspektivansicht des Kernträgerrahmens gemäß Fig. 1, der an der Grundplatte gemäß Fig. 2 montiert ist.
- Fig. 4: zeigt eine Perspektivansicht eines Kernteils mit hiermit verbundener Auswerferplatte.
- Fig. 5: zeigt eine Perspektivansicht des an dem Kernträgerrahmen montierten Kernteils.
- Fig. 6: zeigt eine Perspektivansicht eines zugeordneten Mantelteils.

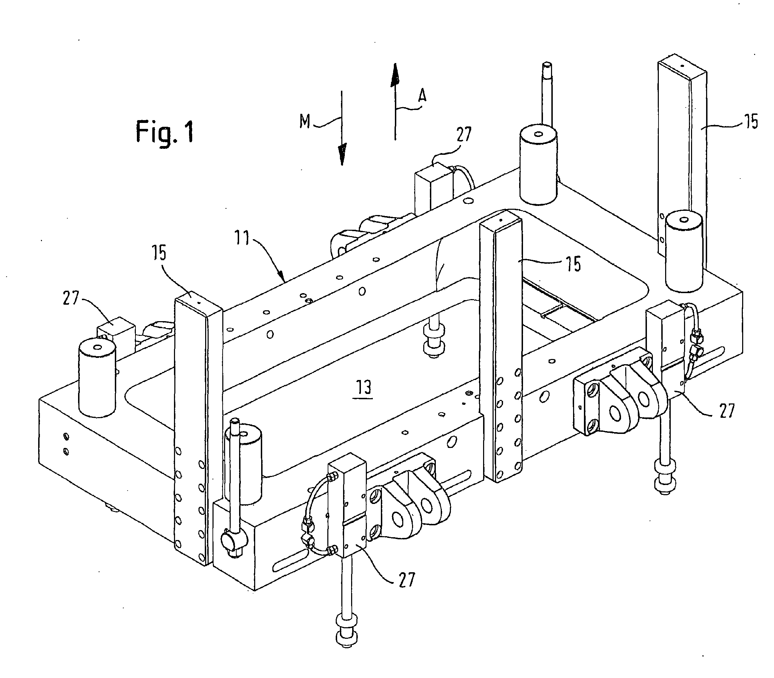

Fig. 1 zeigt einen Kernträgerrahmen 11, der Teil eines Spritzgießwerkzeugs ist und zur Aufnahme eines Kernteils dient, wie nachfolgend noch erläutert wird. Der Kernträgerrahmen 11 besitzt im Wesentlichen die Form eines rechteckigen Rings mit reckeckigem Querschnitt, der eine im Wesentlichen rechteckige zentrale Durchlassöffnung 13 umgibt. Der Kernträgerrahmen 11 besitzt verschiedene Transport-, Führungs- und Befestigungseinrichtungen, die im Zusammenhang mit herkömmlichen Kernträgern an sich bekannt sind. Beispielsweise sind nach oben wegragende Führungslaschen 15 vorgesehen, die zur Führung des nachfolgend noch genannten Mantelteils dienen.

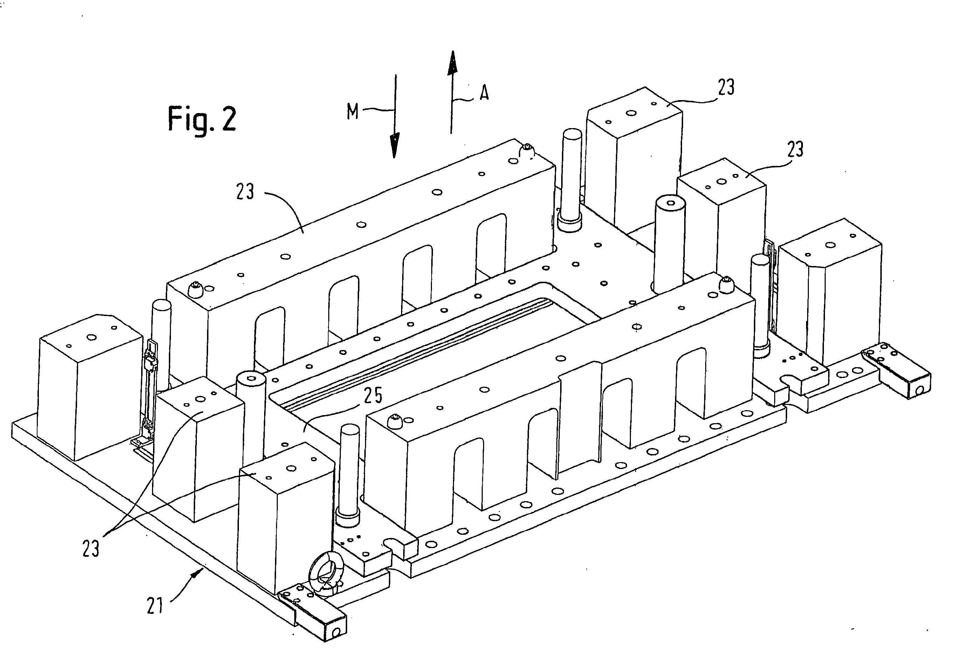

Fig. 2 zeigt eine Grundplatte 21 mit mehreren nach oben weg ragenden Auflageerhöhungen 23. Zwischen den Auflageerhöhungen 23 ist eine vertikal bewegliche Adapterplatte 25 eingesetzt.

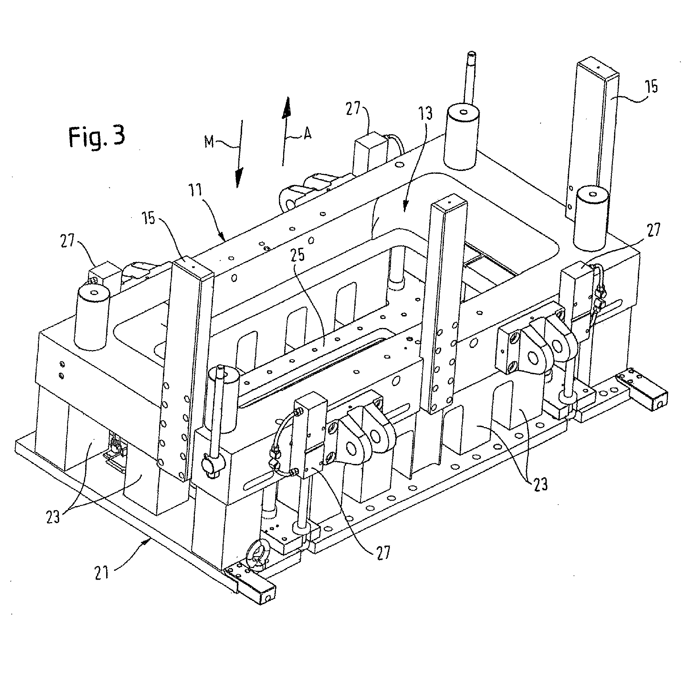

Im montierten Zustand des Werkzeugs ist der in Fig. 1 gezeigte Kernträgerrahmen 11 an der Oberseite der Auflageerhöhungen 23 der in Fig. 2 gezeigten Grundplatte 21 dauerhaft befestigt. Dies ist in Fig. 3 gezeigt. Aus Fig. 3 sind insbesondere auch vier an der Außenseite des Kernträgerrahmens 11 montierte Hubeinrichtungen 27 ersichtlich, mittels derer die Adapterplatte 25 entlang einer vertikal nach oben gerichteten Auswurfrichtung A hubbetätigt werden kann.

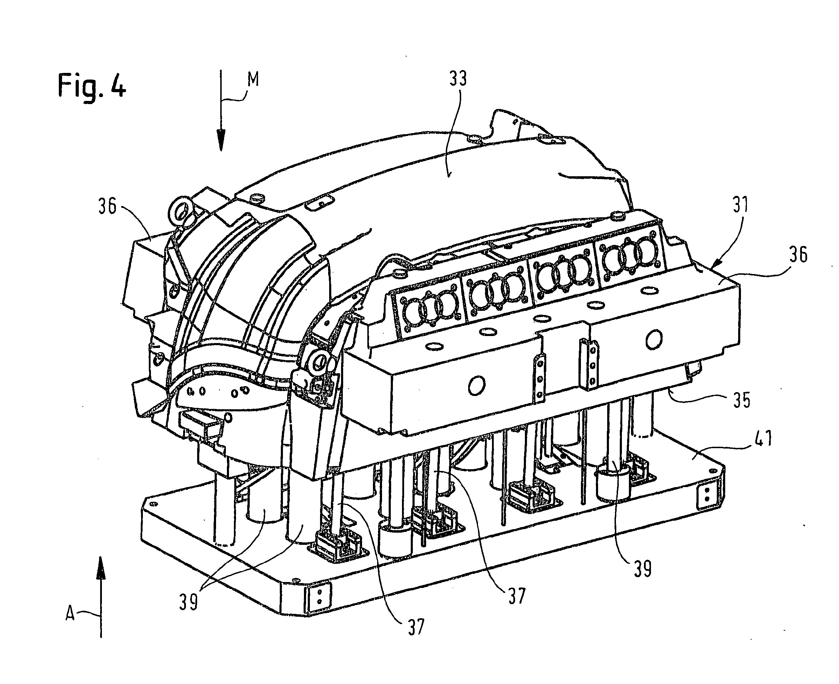

Fig. 4 zeigt ein Kernteil 31 mit einer Form gebenden Kernseite (Oberseite) 33 und einer im Wesentlichen ebenen Unterseite 35. In der Umgebung der Form gebenden Kernseite 33 besitzt das Kernteil 31 seitlich abstehende Flügelabschnitte 36. Das Kernteil 31 ist an der Unterseite 35 über mehrere Betätigungsstangen 37 und Führungssäulen 39 mit einer im Wesentlichen rechteckigen Auswerferplatte 41 verbunden.

In der Darstellung gemäß Fig. 4 befindet sich die Auswerferplatte 41 in einer Betriebsstellung, in der Auswerfereinsätze formschlüssig in die Form gebende Kernseite 33 des Kernteils 31 integriert sind (in Fig. 4 nicht eigens gekennzeichnet). Ausgehend von dieser Betriebsstellung kann die Auswerferplatte 41 relativ zu dem Kernteil 31 entlang der Auswurfrichtung A in eine Auswurfstellung verfahren werden, wobei die Auswerferplatte 41 von den Führungssäulen 39 geführt wird. Aufgrund einer derartigen Auswurfbewegung werden die genannten Auswerfereinsätze mittels der Betätigungsstangen 37 aus dem Kernteil 31 nach oben ausgefahren und/ oder seitlich bewegt, um ein soeben erzeugtes Formteil zu entformen.

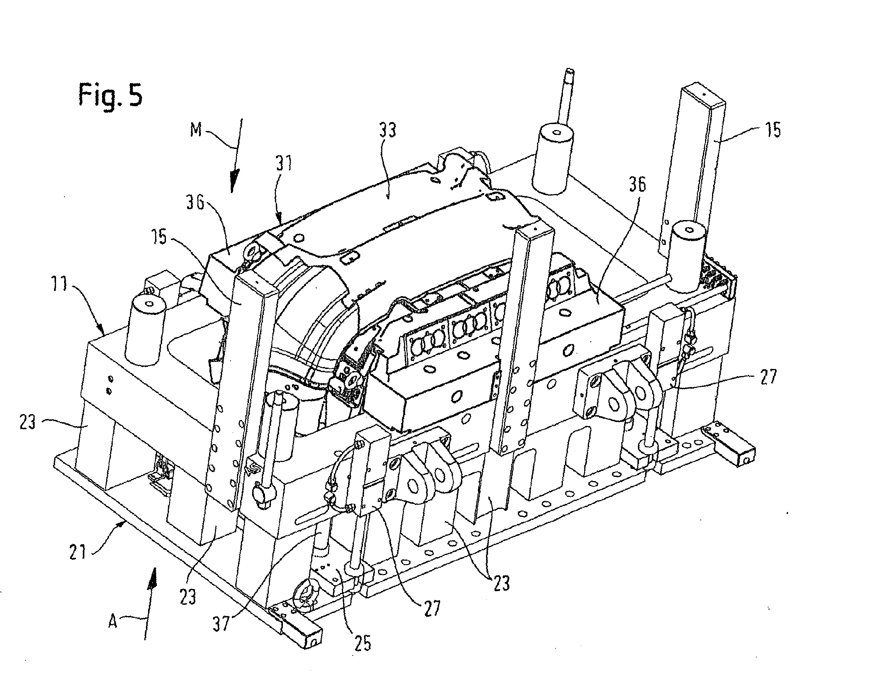

Fig. 5 zeigt einen kompletten Kernaufbau mit der Grundplatte 21 und an deren Oberseite befestigtem Kernträgerrahmen 11, in den das Kernteil 31 eingesetzt ist, wobei die mit dem Kernteil 31 unterseitig verbundene Auswerferplatte 41 in die Grundplatte 21, und zwar in den Zwischenraum zwischen den Auflageerhöhungen 23, hineinragt.

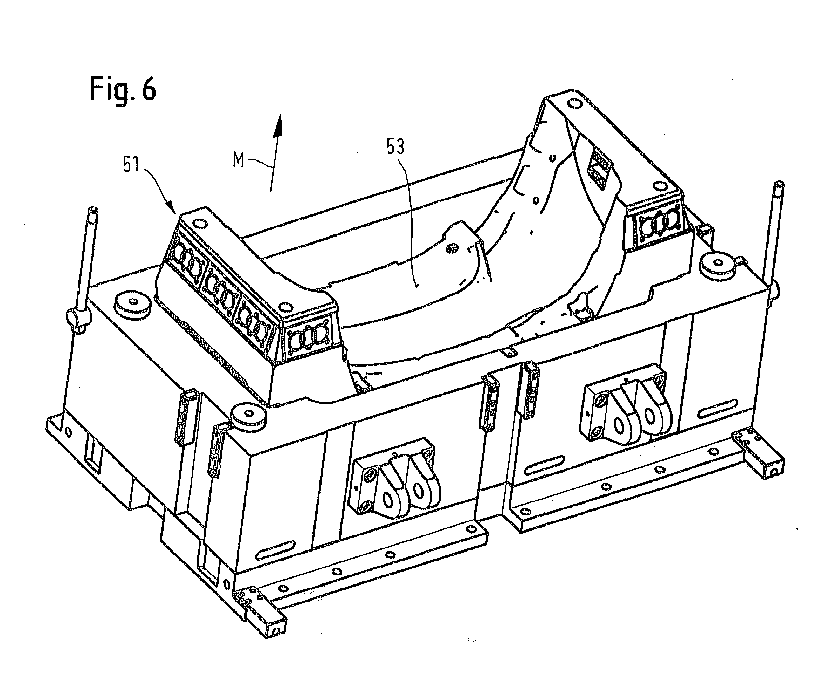

Fig. 6 zeigt schließlich - der besseren Erkennbarkeit halber auf dem Kopf stehend - ein dem Kernteil 31 zugeordnetes Mantelteil 51. Dieses besitzt an seiner Unterseite (Oberseite in der Darstellung gemäß Fig. 6) eine Form gebende Mantelseite 53.

Der Kernträgerrahmen 11, die Grundplatte 21 mit der Adapterplatte 25, das Kernteil 31 mit der Auswerferplatte 41 und das Mantelteil 51 bilden eine Vorrichtung zum Herstellen von Spritzguss-Formteilen, nämlich von Kunststoff-Stoßfängern für Kraftfahrzeuge. Im montierten Zustand dieses Spritzgießwerkzeugs begrenzen die Form gebende Kernseite 33 des Kernteils 31 und die Form gebende Mantelseite 53 des Mantelteils 51 einen dem herzustellenden Stoßfänger entsprechenden Hohlraum, in den zumindest eine Hochdruckzuführung für das Spritzgussmaterial mündet (in den Figuren nicht gezeigt). Der Kernaufbau gemäß Fig. 5 und das Mantelteil 51 gemäß Fig. 6 sind zu diesem Zweck zwischen einer maschinenseitigen Aufspannfläche und einer Druck ausübenden Anordnung gegenseitig verspannbar.

Die Besonderheit des in den Figuren gezeigten Spritzgießwerkzeugs besteht in der Ausgestaltung des Kernträgerrahmens 11 mit der zentralen Durchlassöffnung 13 und in der hierdurch bedingten besonders einfachen Montage und Demontage des Kernteils 31 an bzw. von dem Kernträgerrahmen 11. Der in Fig. 5 gezeigte Kernaufbau kann nämlich auf folgende einfache Weise montiert werden:

Der Kernträgerrahmen 11 wird - wie in Fig. 3 gezeigt - dauerhaft an der Oberseite der Auflageerhöhungen 23 der Grundplatte 21 befestigt, wobei die zwischen den Auflageerhöhungen 23 befindliche Adapterplatte 25 von den Hubeinrichtungen 27 des Kernträgerrahmens 11 hubbetätigbar gehalten wird. Die Grundplatte 21 mit der Adapterplatte 25 und der Kernträgerrahmen 11 sind für unterschiedliche zu erzeugende Formteile universell einsetzbar.

Das Kernteil 31 und die Auswerferplatte 41 dagegen sind speziell für ein bestimmtes zu erzeugendes Formteil ausgebildet. Das Kernteil 31 und die Auswerferplatte 41 mit den zugeordneten Betätigungsstangen 37 und Führungssäulen 39 werden als eine gemeinsame Baueinheit vormontiert, wie in Fig. 4 gezeigt.

Die vormontierte Baueinheit aus Kernteil 31 und Auswerferplatte 41 gemäß Fig. 4 wird von oben entlang einer vertikal nach unten gerichteten Montagerichtung M in die Einheit aus Grundplatte 21 und hieran befestigtem Kernträgerrahmen 11 gemäß Fig. 3 eingesetzt. Dabei wird zunächst die in Montagerichtung M gerichtete Auswerferplatte 41 in die zentrale Durchlassöffnung 13 des Kernträgerrahmens 11 eingeführt. Während das Kernteil 31 weiter entlang der Montagerichtung M bewegt wird, durchdringt die Auswerferplatte 41 die zentrale Durchlassöffnung 13 des Kernträgerrahmens 11. Schließlich liegt, wie in Fig. 5 gezeigt, das Kernteil 31 mit den seitlichen Flügelabschnitten 36 auf dem Kernträgerrahmen 11 auf, wobei die Unterseite 35 des Kernteils 31 in die zentrale Durchlassöffnung 13 des Kernträgerrahmens 11 hineinragt. Die in Betriebsstellung befindliche Auswerferplatte 41 liegt dabei auf der Adapterplatte 25 auf.

Das Kernteil 31 wird nun an dem Kernträgerrahmen 11 fixiert, beispielsweise mittels einfacher Schraubverbindungen. Ebenso werden die Auswerferplatte 41 und die Adapterplatte 25 miteinander verbunden.

Das Demontieren des Kernteils 31 vom Kernträgerrahmen 11 erfolgt in umgekehrter Reihenfolge. Zunächst werden also die Verbindungen zwischen dem Kernteil 31 und dem Kernträgerrahmen 11 sowie zwischen der Auswerferplatte 41 und der Adapterplatte 25 gelöst. Danach kann die Baueinheit aus Kernteil 31 und hiermit verbundener Auswerferplatte 41 entgegen der Montagerichtung M aus dem Kernträgerrahmen 11 entnommen werden, wobei die Auswerferplatte 41 wiederum die zentrale Durchlassöffnung 13 des Kernträgerrahmens 11 passiert.

Die Montage und Demontage des Kernteils 31 mit Auswerferplatte 41 an bzw. von dem Kernträgerrahmen 11 ist also mit geringem Arbeits- und Zeitaufwand möglich. Insbesondere entfällt ein Zerlegen der Baueinheit aus Kernteil 31 und Auswerferplatte 41. Somit ist ein schnelles und einfaches Umkonfigurieren des Werkzeugs zur Herstellung unterschiedlicher Formteile mit jeweils zugeordnetem Kernteil 31 und zugeordneter Auswerferplatte 41 möglich.

Zu dem Mantelteil 51 ist noch anzumerken, dass dieses üblicherweise einen im Vergleich zum Kernteil 31 einfacheren Aufbau ohne verfahrbare Auswerferplatte besitzt. Allerdings ist es prinzipiell möglich, dass auch für das Mantelteil 51 ein Mantelträgerrahmen mit einer zentralen Durchlassöffnung zur Aufnahme einer Auswerferplatte - ähnlich dem Kernträgerrahmen 11 - vorgesehen ist.

Schließlich ist anzumerken, dass die Erfindung und die hiermit verbundenen Vorteile auch auf eine Vorrichtung zum Herstellen von Druckguss-Formteilen oder pressgeformten Teilen anwendbar sind.

### Bezugszeichenliste

- 11: Kernträgerrahmen
- 13: zentrale Durchlassöffnung
- 15: Führungslasche
- 21: Grundplatte
- 23: Auflageerhöhung
- 25: Adapterplatte
- 27: Hubeinrichtung
- 31: Kernteil
- 33: Form gebende Kernseite
- 35: Unterseite
- 36: seitlicher Stützabschnitt
- 37: Betätigungsstange
- 39: Führungssäule
- 41: Auswerferplatte
- 51: Mantelteil
- 53: Form gebende Mantelseite

- A: Auswurfrichtung
- M: Montagerichtung

## Patentansprüche

1. Vorrichtung zum Herstellen von Spritzguss-Formteilen, Druckguss-Formteilen oder Press-Formteilen, mit einem Kernteil (31) und einem zugeordneten Mantelteil (51), die gegeneinander verspannbar sind und dabei zwischen sich einen dem Formteil entsprechenden Hohlraum begrenzen, wobei das Kernteil (31) mit einer Auswerferplatte (41) verbunden ist, die relativ zu dem Kernteil (31) zwischen einer Betriebsstellung und einer Auswurfstellung verfahrbar ist, und wobei das Kernteil (31) an einem Kernträger montierbar ist,
**dadurch gekennzeichnet,**
**dass** der Kernträger als ein Kernträgerrahmen (11) mit einer zentralen Durchlassöffnung (13) ausgebildet ist, und dass das Kernteil (31) und die Auswerferplatte (41) eine gemeinsame Baueinheit bilden, die von einer Seite aus an dem Kernträgerrahmen (11) montierbar ist, wobei die Auswerferplatte (41) in die zentrale Durchlassöffnung (13) des Kernträgerrahmens (11) einführbar ist und diese zu durchdringen vermag.

2. Vorrichtung nach Anspruch 1,
**dadurch gekennzeichnet,**
**dass** das Kernteil (31) mit der Auswerferplatte (41) über Betätigungsstangen (37) und/oder Führungsorgane (39) verbunden ist, und
**dass** eine einzige zentrale Durchlassöffnung (13) des Kernträgerrahmens (11) die Betätigungsstangen (37) und/oder Führungsorgane (39) umgibt.

3. Vorrichtung nach einem der vorhergehenden Ansprüche,
**dadurch gekennzeichnet,**
**dass** die Baueinheit aus Kernteil (31) und Auswerferplatte (41) mit der Auswerferplatte (41) voraus an dem Kernträgerrahmen (11) montierbar ist.

4. Vorrichtung nach einem der vorhergehenden Ansprüche,
**dadurch gekennzeichnet,**
**dass** im montierten Zustand der Vorrichtung das Kernteil (31) zumindest teilweise formschlüssig in die zentrale Durchlassöffnung (13) des Kernträgerrahmens (11) hineinragt.

5. Vorrichtung nach einem der vorhergehenden Ansprüche,
**dadurch gekennzeichnet,**
**dass** das Kernteil (31) seitliche Stützabschnitte (36) aufweist, die im montierten Zustand der Vorrichtung auf dem Kernträgerrahmen (11) aufliegen.

6. Vorrichtung nach einem der vorhergehenden Ansprüche,
**dadurch gekennzeichnet,**
**dass** der Kernträgerrahmen (11) im Wesentlichen die Form eines rechteckigen Rings mit rechteckigem Querschnitt besitzt.

7. Vorrichtung nach einem der vorhergehenden Ansprüche,
**dadurch gekennzeichnet,**
**dass** der Kernträgerrahmen (11) an einer Grundplatte (21) montiert ist.

8. Vorrichtung nach Anspruch 7,
**dadurch gekennzeichnet,**
**dass** zwischen der Grundplatte (21) und dem Kernträgerrahmen (11) eine hubbetätigbare Adapterplatte (25) gelagert ist, die im montierten Zustand der Vorrichtung mit der Auswerferplatte (41) verbunden ist.
